# EUROPEAN PATENT SPECIFICATION

(11) **EP 1 665 140 B1**
(45) Date of publication and mention of the grant of the patent: **03.02.2016**
(21) Application number: 04788503.3
(22) Date of filing: 14.09.2004
(51) Int. Cl.: G06K 19/077

(54) **IDENTIFICATION CARD**
IDENTIFIKATIONSKARTE
CARTE D'IDENTIFICATION

(30) Priority: 18.09.2003 NL 1024323
(43) Date of publication of application: 07.06.2006
(73) Proprietor: Nederlandse Organisatie voor toegepast- natuurwetenschappelijk onderzoek TNO, 2595 DA 's-Gravenhage (NL)
(72) Inventor: VAN BREEMEN, Albert, Jos, Jan, Marie, NL-5624 KT Eindhoven (NL); SCHOO, Harmannus, Franciscus, Maria, NL-5521 PR Eersel (NL); BOCHNO, Victor, Robert, NL-5553 BD Valkenswaard (NL); SEWALT, Karl, Everhardus, NL-3119 BT Schiedam (NL)
(74) Representative: V.O.
(86) International application number: PCT/NL2004/000637
(87) International publication number: WO 2005/027036

(56) References cited:
- EP-A- 0 831 420
- DE-C- 19 923 138
- US-A1- 2002 181 208
- US-A1- 2003 011 868
- US-A1- 2003 062 830

## Description

### Field of the invention

The invention relates to an identification card, comprising a card body with graphic identification information, as well as an identification system suitable for cooperation with such an identification card.

### Background of the invention

Identification cards comprising a card body with graphic identification information are commonly known. To be considered here are, for instance, identification passes, credit cards, etc. The graphic identification - alphanumeric and/or other signs or codes - is normally provided on the outside of the card body in the form of imprint, relief print and/or holograms. Other, non-graphic identification information can consist of codes, etc., that may be stored in a magnetic strip provided on the card body, or in a memory or microprocessor to be accessed via contacts or wirelessly. In the context of this application, graphic information is understood to mean alphanumeric and/or non-alphanumeric images, signs or codes which can be perceived or detected in the optical domain - by means of visible or invisible (infrared, ultraviolet, etc.) light.

Since such information is normally provided on the outside of the card body, that information - in particular where it is used for identification, access control, etc. - is susceptible of undesired manipulation and falsification from outside, to which problem the present invention seeks to provide a solution.

### Summary of the invention

The invention proposes an system according to claim 1.

A first aspect is that the identification information can be made visible under particular conditions, which creates the possibility of having the identification card cooperate with an identification device which is suitable to make identification information perceptible only when the card cooperates with the device.

A second aspect is that the identification information, if desired, can be emitted in the form of invisible - infrared or ultraviolet - light, which also constitutes a certain barrier against manipulation and/or falsification.

The light emission means can be preferentially formed by a substantially flat light emitting (or electroluminescent) diode, hereinafter designated by FLED (not to be confused with "Flashing Light Emitting Diode"), such as a Polymer LED (PLED), an Organic LED (OLED) or a "Small Molecule" Organic LED (SMOLED).

The specific graphic identification information can be provided by providing one or more layers of the FLED that are necessary for light emission - such as anode(s), cathode(s) and/or intermediary luminescence/emission layers, etc. - with such identification information. The information can for instance be determined by the shape of one or more of those layers and/or by the composition of the respective layer or layers, which determine, for instance, the color of the light. It is then possible that the graphic information is determined substantially by the shape and/or composition of a single layer, or by a combination of the shape and/or composition of more layers. Those layers can (partly) cooperate with each other or be independent of each other.

The graphic identification information, besides being embodied by the shape and/or material properties/composition of the different layers, can also be contained in the shape and/or intensity of the electrical field in the respective layers as effected by the electrical source, and the electrical current through the respective layers as effected by the electrical source, respectively. For instance, the shape in which the light is emitted is determined by the shape of the mutual projection of the anode (s) and cathode (s) and/or the shape (s) of the intermediate layer or layers such as emission, coating, covering and/or reflection layer or layers, etc.

For activating the FLED, the identification card can comprise an internal electrical source, for instance a flat miniature battery or accumulator. Also, the identification card can comprise means-for instance galvanic contacts-for connecting the FLED with an external electrical source. The two options are possible at the same time, with the internal electrical source for instance being recharged from the external source.

It is noted that in the field of the invention the following publications give relevant background information.

US-A1-2003/062830 relates to the mechanical construction and reinforcement of thin, flexible OLED devices;

EP-A-0831420 relates to information stored on a card being rendered readable to the human eye by means of optical components;

US-A1-2002/181208 relates to the assembly of electronic devices- among which a display-on a substrate; and

DE-C-19923138 relates to the integration of displays into cards on the basis of printing/laminating processes.

Patent publication US 2003/011868 discloses an electrophoretic display for a portable device and a separate update system for updating the electrophoretic display, the separate update system being provided with an emission layer including LED, organic LED, CRT, backlit active or passive matrix LCD.

Hereinafter, the invention is set out in more detail with reference to a few exemplary embodiments.

### Drawings

Fig. 1 shows an identification card according to an exemplary embodiment of the invention.
Fig. 2 shows an exemplary embodiment of an identification and access system with which the identification card can cooperate.
Fig. 3 shows in more detail the structure of the identification card of Fig. 1.

### Description of the drawings

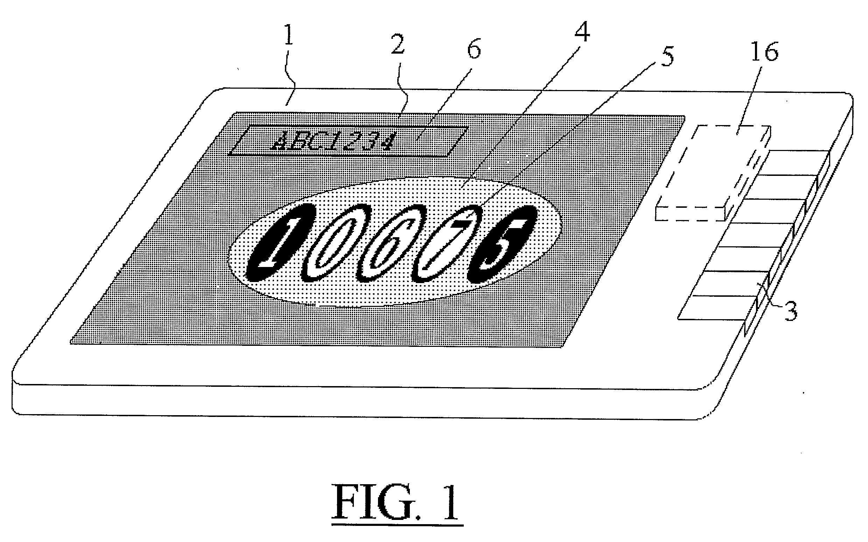

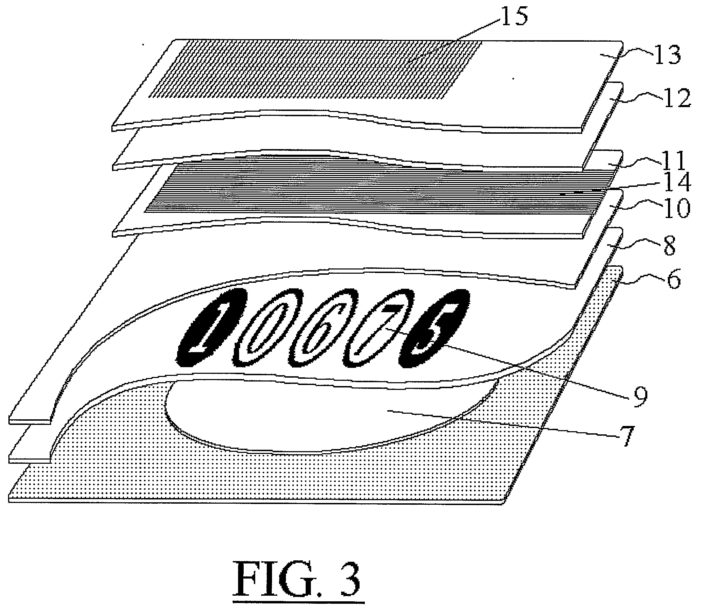

Fig. 1 shows an identification card, comprising a card body 1 in which graphic identification information can be shown by means of a FLED 2, suitable for light emission, which is built up from different layers and will be discussed in more detail hereinafter with reference to Fig. 3.

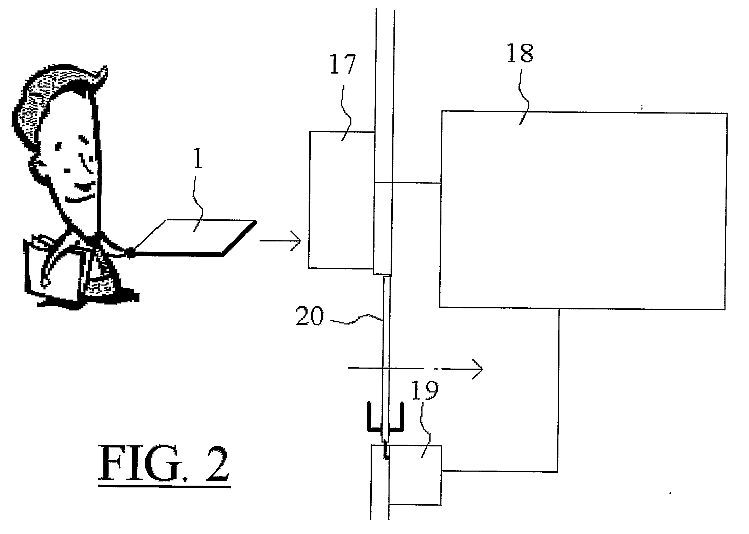

The FLED 2 in this exemplary embodiment is of multiple design and comprises different identification areas 4, 5 and 6, which can be read out and processed by a card reader 17, shown in Fig. 2, of an identification system 18. In Fig. 2, the identification system 18 is used for (*inter alia*) access control: the card body 1 is put into the card reader 17 by a person desirous of access to a protected space. The card reader 17 reads out the identification area used for access control, for instance the area 6, and transmits that information as read out (optically, for instance in the form of infrared light) to the identification system 18, which compares that information with access information previously stored in the system 18, for instance: "card with access code (in area 6) ABC1234 has access to the space behind the door 20 which is locked with locking device 19". Thus, the system 18 transmits an "unlock" code to the locking device 19, after which the person - after having taken his card 1 from the reader - is given access to the respective space via the door 20.

Returning to Fig. 1, the area 4 represents a background in a particular color, area 5 a number of identification characters "10675" in a particular font (the "1" and the "5" inverted) and color, and area 6 an alphanumeric display in, if so desired, yet another color. The identification information in the areas 4, 5 and 6 can be made visible by connecting contacts 3 with electrical supply contacts provided in the card reader 17 (Fig. 2), so that the FLED 2 is activated only if it is in the card reader 17 (which means an additional protection from "card fraud").

The different areas 4, 5 and 6 can emit light of mutually different wavelengths, in the visible as well as in the invisible spectrum.

It is also possible not to supply the FLED 2 from an external electrical source, but (possibly partly) from an electrical source incorporated into the card body 1 which is rechargeable for instance via the contacts 3 or via a light collector (not shown), so that the identification information is also visible if the card has no connection with the respective reader.

The specific graphic identification information can be provided by providing one or more layers of the FLED that are needed for light emission - such as anode(s), cathode(s) and/or intermediary luminescence/emission layers, etc. - with such identification information. The information can for instance be determined by the shape of one or more of those layers and/or by the composition of the respective layer or layers, which determine, for instance, the color of the light. It is then possible that the graphic information is determined substantially by the shape and/or composition of a single layer, or by a combination of the shape and/or composition of more layers. Those layers can partly cooperate with each other and/or be partly independent of each other. By way of illustration, the exemplary embodiment shown in Fig. 3 comprises a cathode 6 on which a light emitting polymer (LEP) 7 is provided in the form of the area 4 in Fig. 1. Situated above the cathode 6 is a light-transmitting anode 10. When the cathode 6 and anode 10 are connected with a voltage source, the LEP 7 emits light in the direction of the anode 10 and, since the latter is light-transmitting, further to outside the FLED 2.

Situated between the cathode 6 and the anode 10 is a second LEP layer 8. The composition thereof may be different from that of the LEP layer 7, so that it emits a different color of light. On the LEP 8, the identification characters "10675" have been provided, for instance by means of an opaque lacquer layer or by means of a chemical etching process or by a laser treatment whereby the light emitting material properties of the LEP 7 have been inactivated in the form of the respective characters. Under the influence of the electrical field between the cathode 6 and the anode 10, the thus processed LEP 8 emits light in the direction of the anode 10, thereby also rendering the identification characters "10675" visible.

Accordingly, the graphic identification information, besides being embodied by the shape and/or material properties/composition of the different layers, can also be contained in the shape and/or intensity of the electrical field in the respective layers as effected by the electrical source, and the electrical current through the respective layers as effected by the electrical source, respectively. In the exemplary embodiment shown, the shape in which the light is emitted is determined by the shape of the LEP coating 7 and LEP layer 8 situated between the cathode 6 and anode 10. Clearly, the shape of the cathode 6 and the anode 10 also determines the shape of the surface of light that is radiated upwards via the anode 10, since the shape of the electrical field between the cathode 6 and the anode 10 is determined by the shape of the projection of those two electrodes 6 and 10.

Alternatively, or additionally, use can be made of emitting, via the FLED 2, identification (and/or other) information which is not inherent in the form of cathode 6, anode 10 and/or intermediary LEP layers, as with the system of the layers 6 to 10, but which is "drivable" from, for instance, a microprocessor 16 included in the card body 1. That microprocessor 16 for instance can in turn be driven from the identification system via the contacts 3. The respective identification information or other information, represented in Fig. 1 by the series of characters "ABC1234", is emitted by a LEP layer 12 which is situated between a layer 11, provided with a matrix of cathode lines 14 individually connectible by the microprocessor 16 with the negative pole of an electrical source, and a layer 13, provided with anode lines 15 individually connectible by the microprocessor 16 with the positive pole of the electrical source. The characters to be emitted, in the figure: "ABC1234", result from the electrical fields (and the electric currents, respectively) between respective projections (nodes) of the cathode and anode lines 14 and 15 connected with the electrical source, as a result of light emission of the LEP-layer 12, at those so activated cathode-anode-matrix nodes.

The different layers 6 to 13 and the structures provided thereon can be fabricated in a known manner and be assembled into an integrated, multiple FLED 2 which is useful for application as identification card with advanced possibilities of use and improved security aspects.

Finally, it is noted that the graphic identification information can take a variety of forms, not only the form of alphanumeric characters, as in the foregoing example, but also the form of, for instance, biometric patterns useful for identification, such as those of "fingerprints", etc. Such biometric patterns can be recorded in a fairly simple manner and be subsequently used for producing a corresponding pattern on, for instance, a LEP layer 8. Such production can be done by analog route, for instance by means of a well known process of projecting and etching the pattern on the LEP layer 8. If the pattern is recorded digitally, another possibility is available, viz. representing the pattern by means of the matrix formed by the cathode and anode lines 14, 15 in the above-discussed exemplary embodiment. The node parameters (*inter alia* regarding the luminance) of the respective digitized biometric pattern are supplied to the driver 16, which in turn converts these parameters to electrical voltage on the different cathode line/anode line combinations.

## Claims

1. An identification system, comprising an identification card and a card reader (17), the identification card comprising a card body (1) with graphic identification information, light emission means which, when the card cooperates with the card reader, are suitable for emitting the identification information as light emission, which light emission means comprise a substantially flat light emitting diode (2), hereinafter designated by FLED, connectable to an electrical source, which comprises one or more layers (7, 8, 12) for light emission, which one or more layers contain at least a part of the graphic identification information, the card reader comprising means (17,18) for detecting the identification information emitted by the light emission means, and wherein the identification information is made visible only when the identification card cooperates with the card reader (17) which is adapted to make the identification information perceptible.

2. An identification system according to claim 1, wherein the FLED (2) is a Polymer FLED.

3. An identification system according to claim 1, wherein the FLED (2) is an Organic FLED.

4. An identification system according to claim 1, wherein the graphic identification information is contained in the shape of the respective layer or layers (7, 8, 12) for light emission.

5. An identification system according to claim 1 or 4, wherein the graphic identification information is contained in the composition of the respective layer or layers (7, 8, 12) for light emission.

6. An identification system according to claim 1,4 or 5, wherein the graphic identification information is contained in the shape and/or intensity of the electrical field in the respective layers (7, 8, 12) for light emission as effected by the electrical source, and the electrical current through the respective layers as effected by the electrical source, respectively.

7. An identification system according to claim 1, wherein the electrical source is internal to the identification card and connectible with the light emission means.

8. An identification system according to claim 1, wherein the electrical source is external to the identification card, and wherein the identification card comprising contacts (3) for connecting the electrical source with the light emission means.

9. An identification system according to any of claims 1 to 8, wherein the identification information is emitted in visible light.

10. An identification system according to any of claims 1 to 8, wherein the identification information is emitted in invisible light.

## Patentansprüche

1. Identifikationssystem, umfassend eine Identifikationskarte und einen Kartenleser (17), wobei die Identifikationskarte einen Kartenkörper (1) umfasst mit grafischer Identifikationsinformation, Lichtemissionsmitteln, die, wenn die Karte mit dem Kartenleser zusammenarbeitet, geeignet sind, die Identifikationsinformation als Lichtemission auszugeben, welche Lichtemissionsmittel eine im Wesentlichen flache, lichtemittierende Diode (2), im Folgenden als FLED bezeichnet, umfassen, die an eine elektrische Quelle anschließbar ist, die eine oder mehrere Schichten (7, 8, 12) für Lichtemission umfasst, wobei die eine oder mehreren Schichten mindestens einen Teil der grafischen Identifikationsinformationen enthalten, wobei der Kartenleser Mittel (17, 18) zum Detektieren der von den Lichtemissionsmitteln ausgegebenen Identifikationsinformation umfasst, und wobei die Identifikationsinformation nur sichtbar gemacht wird, wenn die Identifikationskarte mit dem Kartenleser (17), der geeignet ist, die Identifikationsinformation wahrnehmbar zu machen, zusammenarbeitet.

2. Identifikationssystem nach Anspruch 1, wobei die FLED (2) eine Polymer-FLED ist.

3. Identifikationssystem nach Anspruch 1, wobei die FLED (2) eine organische FLED ist.

4. Identifikationssystem nach Anspruch 1, wobei die grafische Identifikationsinformation in Form der entsprechenden Schicht oder Schichten (7, 8, 12) für Lichtemission enthalten ist.

5. Identifikationssystem nach Anspruch 1 oder 4, wobei die grafische Identifikationsinformation in der Zusammensetzung der entsprechenden Schicht oder Schichten (7, 8, 12) für Lichtemission enthalten ist.

6. Identifikationssystem nach Anspruch 1, 4 oder 5, wobei die grafische Identifikationsinformation in Form und/oder Intensität des elektrischen Feldes in den entsprechenden Schichten (7, 8, 12) für Lichtemission, wie bewirkt von der elektrischen Quelle bzw. dem elektrischen Strom durch die entsprechenden Schichten, wie bewirkt durch die elektrische Quelle, enthalten ist.

7. Identifikationssystem nach Anspruch 1, wobei die elektrische Quelle in die Identifikationskarte integriert ist und mit dem Lichtemissionsmittel verbunden werden kann.

8. Identifikationssystem nach Anspruch 1, wobei die elektrische Quelle extern von der Identifikationskarte ist, und wobei die Identifikationskarte Kontakte (3) umfasst, um die elektrische Quelle mit den Lichtemissionsmitteln zu verbinden.

9. Identifikationssystem nach einem der Ansprüche 1 bis 8, wobei die Identifikationsinformation in sichtbarem Licht ausgegeben wird.

10. Identifikationssystem nach einem der Ansprüche 1 bis 8, wobei die Identifikationsinformation in unsichtbarem Licht ausgegeben wird.

## Revendications

1. Système d'identification, comprenant une carte d'identification et un lecteur de carte (17), la carte d'identification comprenant un corps de carte (1) ayant une information d'identification graphique, des moyens d'émission d'une lumière qui, lorsque la carte coopère avec le lecteur de carte, sont adaptés pour émettre l'information d'identification sous forme d'une émission de lumière, lesquels moyens d'émission de lumière comprennent une diode émettrice de lumière sensiblement plate (2), ci-après appelée FLED, pouvant être reliée à une source électrique, qui comprend une ou plusieurs couches (7, 8, 12) pour émission de lumière, lesquelles une ou plusieurs couches contiennent au moins une partie de l'information d'identification graphique, le lecteur de carte comprenant des moyens (17, 18) pour détecter l'information d'identification émise par les moyens d'émission d'une lumière, et dans lequel l'information d'identification est rendue visible uniquement lorsque la carte d'identification coopère avec le lecteur de carte (17) qui est adapté pour rendre perceptible l'information d'identification.

2. Système d'identification selon la revendication 1, dans lequel la FLED (2) est une FLED polymère.

3. Système d'identification selon la revendication 1, dans lequel la FLED (2) est une FLED organique.

4. Système d'identification selon la revendication 1, dans lequel l'information d'identification graphique est contenue sous la forme de la couche ou des couches (7, 8, 12) respectives pour émission de lumière.

5. Système d'identification selon les revendications 1 ou 4, dans lequel l'information d'identification graphique est contenue dans la composition de la couche ou des couches (7, 8, 12) respectives pour émission de lumière.

6. Système d'identification selon les revendications 1, 4 ou 5, dans lequel l'information d'identification graphique est contenue sous la forme et/ou l'intensité du champ électrique dans les couches respectives (7, 8, 12) pour émission de lumière tel que réalisé par la source électrique, et du courant électrique à travers les couches respectives tel que réalisé par la source électrique, respectivement.

7. Système d'identification selon la revendication 1, dans lequel la source électrique est à l'intérieur de la carte d'identification et peut être reliée aux moyens d'émission d'une lumière.

8. Système d'identification selon la revendication 1, dans lequel la source électrique est à l'extérieur de la carte d'identification, et dans lequel la carte d'identification comprend des contacts (3) pour relier la source électrique aux moyens d'émission d'une lumière.

9. Système d'identification selon l'une quelconque des revendications 1 à 8, dans lequel l'information d'identification est émise dans une lumière visible.

10. Système d'identification selon l'une quelconque des revendications 1 à 8, dans lequel l'information d'identification est émise dans une lumière invisible.
